# EUROPEAN PATENT SPECIFICATION

(11) **EP 0 527 597 B1**
(45) Date of publication and mention of the grant of the patent: **08.07.1998**
(21) Application number: 92307206.0
(22) Date of filing: 06.08.1992
(51) Int. Cl.: B60C 5/16, B60C 15/024

(54) **A pneumatic tyre**
Luftreifen
Bandage pneumatique

(30) Priority: 09.08.1991 JP 224730/91; 16.06.1992 JP 183250/92
(43) Date of publication of application: 17.02.1993
(60) Divisional application: 96202705.8
(73) Proprietor: SUMITOMO RUBBER INDUSTRIES LIMITED, Kobe-shi, Hyogo-ken (JP)
(72) Inventor: Tagashira, Kenji, Kobe-shi, Hyogo-ken (JP); Yoshida, Masanao, Akashi-shi, Hyogo-ken (JP); Uemura, Yoshiaki, Kobe-shi, Hyogo-ken (JP)
(74) Representative: Stewart, Charles Geoffrey

(56) References cited:
- BE-A- 522 447
- CH-A- 295 878
- FR-A- 2 409 163
- FR-A- 2 536 017
- GB-A- 2 011 324

## Description

The invention relates to a pneumatic tyre capable of maintaining stable running by inhibiting the formation of gaps between the outer surface of the bead and the rim flange so as to prevent rim deviation, without loss of inflation pressure.

In a pneumatic tyre, for example, a passenger car tyre, as vehicle speeds are becoming higher, the frequency of abrupt starting and abrupt stopping becomes higher. To withstand this a strong fitting force between the beads and the rim is required. On the other hand, the use of tubeless tyres is increasing for high speed running and such a tubeless tyre is mounted on a rim with a particularly strong fitting force. Tyres for buses and trucks are exposed to heavy load, and also are fitted to their rims with a strong fitting force.

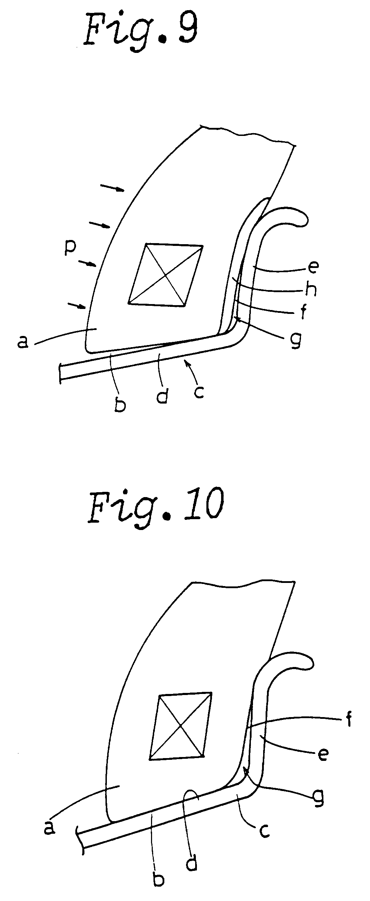

When assembling such a tightly fitting tyre to its rim (c), as shown in Fig. 10 the bead bottom surface (b) of the bead (a) is tightly fitted to the rim seat (d) without a gap. However the bead outer surface (f) located by the rim flange (e) starts by contacting the upper part of the flange (e) on assembling the tyre onto its rim (c), so that a gap (g) is formed between the lower part of the outer side surface (f) and the flange (e).

This gap (g) decreases gradually as the tyres run and then fully contact the outer side surface (f). With this decrease of the gap (g), however, the assembly precision varies, and the fitted portions of the tyre and its rim are changed. This affects the balance of the assembly and the distribution of force variations on running. Furthermore, the contact area of the bead and rim decreases, and further rim deviation may occur between the bead and rim seat when sudden braking is applied, which disturbs the straightforward motion and lowers the durability.

Thus although the force variation and uniformity of the assembly are checked before shipping, there is a difference in assembly precision when the tyre is run by the user. In order to prevent formation of such force variations, there has been a keen demand for the development of a tyre which does not result in such gaps even if assembled onto the rim without any particular attention by the user.

It is a primary object of the invention to provide a pneumatic tyre capable of maintaining running stability and uniformity by inhibiting the formation of gaps between the bead outer surface and the rim flange so as to prevent rim deviation, without loss of inflation pressure.

As a result of repeated studies and experiments to satisfy the above, the present inventors reached the following conclusions.

Formation of a closed gap between the bead outer surface the and rim flange may be inhibited at the time of rim assembling by:
(1) Installing exhaust means capable of communicating between the gap and outside when assembled onto the rim;
(2) Forming this exhaust means by providing grooves on the bead outer surface; and
(3) Setting the inner end of the exhaust means at a position remote from the bead bottom surface at a specific radial distance.

Incidentally, the use of protrusions or grooves on the bead outer surface is shown in the Japanese Patent Publication No. 58-57321, but this proposal is intended to prevent swelling of the tyre when the tubeless tyre is mounted on a wheel having a rim diameter smaller than the design value. And in the above proposal, in order to achieve this object, the inner end of the grooves or protrusions is extended nearly to the bead bottom surface. If that proposal is used to eliminate the gap caused when assembling onto a rim, the air accumulated in the tyre inner space may be forced out. Accordingly, it is found essential to keep the inner end position of the exhaust means at a certain distance from the bead bottom surface.

According to one aspect of the present invention, a pneumatic tyre for mounting on a normal rim, comprises a pair of beads each having a bead bottom surface seating on a rim seat of the normal rim and bead outer surface connected to the bead bottom surface and arranged to abut a rim flange of the normal rim, characterised in that the bead outer surface has exhaust means composed of a plurality of grooves formed in the bead outer surface and extending outwards in the radial direction from an inner end of the exhaust means so as to form an air passage for escaping air from between the rim flange and the bead outer surface on assembly of the tyre to the rim, and wherein the inner end of the exhaust means is positioned within a region remote from a bead base line by a distance of at least 0.5 and not more than 1.5 times a separating point height Fh defined as the height in the radial direction from the bead base line to a separating point at which the bead outer surface separates from the rim flange so that when the tyre is fitted to the rim (10) air trapped between the bead outer surface and the rim flange is exhausted and the bead outer surface radially inward of the exhaust means contacts the rim to provide an air-tight seal.

Here, the bead base line refers to the reference of the nominal rim NRD of the rim which is the radius to the tyre axial line passing through the bead heel point which is the imaginary point at which the rim seat line intersects the rim flange line.

When the bead outer surface moves to the rim flange on assembly, air existing between the bead outer surface and rim flange is exhausted through the exhaust means on the bead outer surface.

As a result, air is not left in the gap along the bead outside surface near the bead bottom surface as shown in Fig. 10.

Therefore, the nonuniformity of the tyre to rim assembly likely to occur conventionally as the gap decreases with the passing of the time in tyre running will decrease and force variation due to tyre Radial Runout (RRO) and imbalance due to loss of rim assembly precision does not increase. As a result, even in the case of long-term running, vibrations do not increase, and the running stability and ride comfort are maintained and uniform fitting and contact of the tyre bead and rim are retained, and therefore tyre/rim deviation in sudden braking is prevented while durability is enhanced. In addition, it is not necessary to pay special attention to the rim assembly procedure.

The exhaust means extend outwards in the radial direction from the inner end located within a region remote from the bead base line outward in the radial direction by a distance of 0.5 to 1.5 times the separating point height Fh which is the distance between the bead base line and the point in the radial direction where the tyre to rim contact ceases.

When assembling to the rim, as shown in Fig. 9, the pressure (p) in the tyre inner space is increased and this brings the bead outer surfaces (f) closer to the rim flange (e). Air in the gap (g) formed between the outer surface (f) and the rim flange (e) is forced out through the exhaust means (h).

However, if the inner end of the exhaust means extends to the bead bottom (b), if the fitting is imperfect between the bead bottom surface (b) and the rim seat (d) of the rim (c), for example, a seal is not obtained and inflation air escapes through the exhaust means.

On the other hand, as a result of observation using a CT scanner, a gap (g) formed at the time of assembly is known to be likely to be left in the region close to the bead bottom surface (b). In order to remove this gap (g) completely, it is necessary to contact tightly the lower part of the bead outer surface (f) to the rim flange. Because of these above mentioned reasons, the inner end of the exhaust means is set as at a minimum 0.5 times the separating point height Fh. Also, the position of the inner end of the exhaust means is best located outward as far as possible in the radial direction.

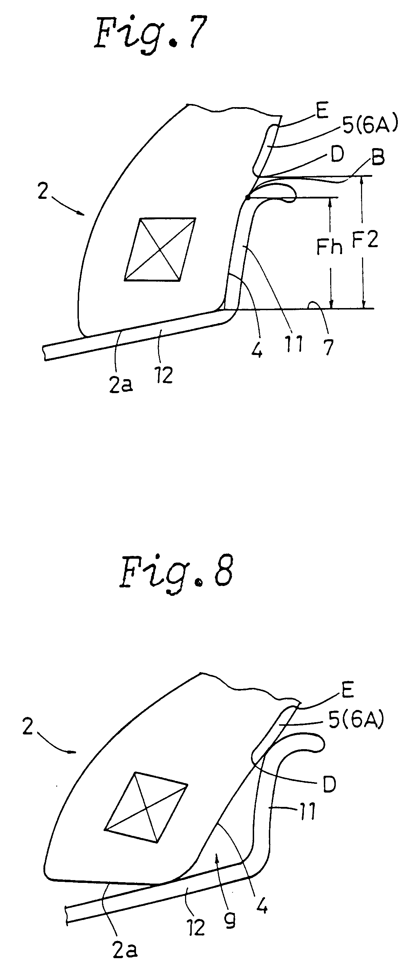

The exhaust means inner end may be positioned at greater than 1.0 times the separating point height Fh and still be effective because on tyre/rim assembly the bead bottom surface and rim seat are pushed together with a strong fitting force. Accordingly, at first, as shown in Fig. 8, the lower part of the bead part is pushed onto the rim of inclined inwards in the tyre axial direction. Therefore, the bead outer surface contacts the rim flange at a high point above the fitted separating point height Fh, so that the inner end of the exhaust means is positioned behind the separating point height Fh. However, if the inner end position of the exhaust means is over 1.5 times the separating point height Fh, even at the start of rim assembly, the inner end of the exhaust means does not communicate with the gap, and the air in the gap is not forced out.

An embodiment of the present invention will now be described by way of example, referring the attached drawings, in which;
Fig. 1 is a sectional view of a right half of a tyre showing an embodiment of the invention;
Fig. 2 is an enlarged sectional view of the bead;
Fig. 3 is a front view showing grooves;
Fig. 4 is a tyre circumferential sectional view showing a bead outer surface and rim flange assembly;
Fig. 5 is a sectional view showing the action after rim assembly;
Fig. 6 is a sectional view showing the intermediate action of rim assembly;
Fig. 7 is a sectional view showing the action after rim assembly in another mode;
Fig. 8 is a sectional view showing the intermediate action of the rim assembly shown in Fig. 7;
Fig. 9 is a sectional view showing prior art;
Fig. 10 is a sectional view showing the tyre/rim assembly of a conventional tyre;

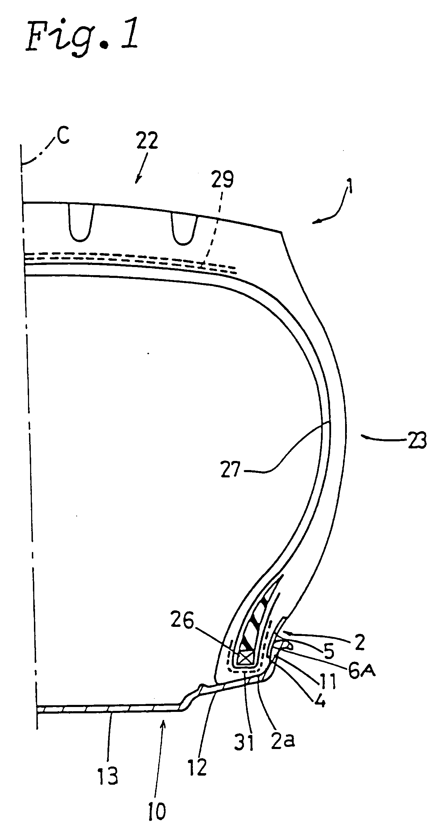

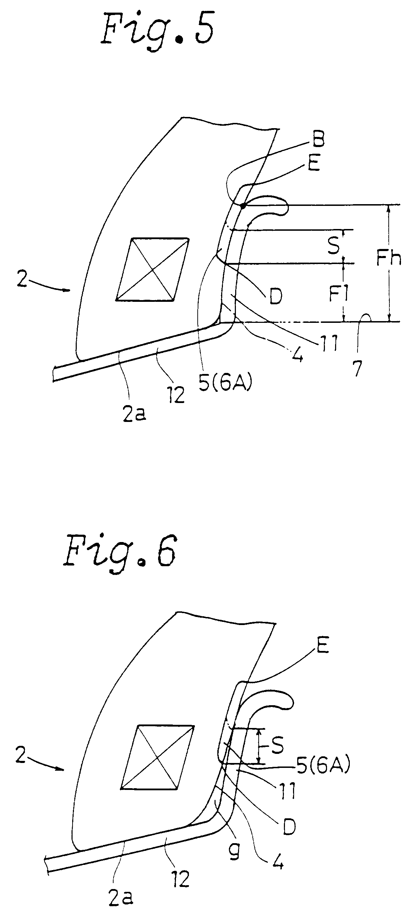

Figs. 1 to 8 show a pneumatic tyre 1 which is mounted on a normal rim 10 and inflated with normal internal pressure. The pneumatic tyre 1 is a tubeless tyre, and grooves 6A are provided as exhaust means 6 extending in the tyre radial direction. The grooves are on the bead outer surface 4 facing a rim flange 11.

The normal rim 10 has a pair of rim flanges 11, each receiving a bead outer surface 4 of a tyre 1; a pair of rim seats 12, each extending inwardly from the rim flange 11 and receiving the bead bottom surface 2a, and a well region 13 between the rim seats 12. The rim flange 11 and rim seat 12 are smoothly connected to each other through a curved heel region. A bead heel point, defined as the intersection of an extension line of the rim flange 11 and an extension line of the rim seat 12. Also the bead base line is defined as a tyre axial line passing through the bead heel point.

The pneumatic tyre 1 comprises a tread part 22, side walls 23, 23 each extending radially inwards from both ends of the tread 22, and beads 2, 2 each positioned radially inside the end of the side wall 23. Also, the pneumatic tyre has a toroidal carcass 27 extending from the tread part 22 through the sidewalls 23 and turned up around the bead cores 26 one in each of two beads 2. The tread is reinforced by a belt layer 29 disposed radially outside the carcass 27.

The carcass 27 has a so-called radial or semiradial structure in which the carcass cords are inclined at an angle of 60 to 90 degrees with respect to the tyre equator C. The carcass cords are made of fibre cords such as nylon, polyester, rayon or aromatic polyamide.

The belt layer 29 is composed of at least two belt plies of belt cords which the cords of adjacent belt plies cross. The belt cords are made of cords such as nylon, polyester, rayon, and aromatic polyamide, or steel cords.

In this embodiment, a reinforcing layer 31 enveloping the carcass 27 around the bead core 26 is provided at each bead 2. The reinforcing layer 31 is composed of a ply having organic fibre such as aromatic polyamide cords or steel cords arranged so as to cross the carcass cords. The rigidity of the bead 2 is enhanced by this reinforcing layer 31.

In the bead 2, moreover, a chafer 32 to provide the bead bottom surface 2a and bead outer surface 4 is disposed outside the reinforcing layer 31. The hardness of the rubber of the chafer 32 in this embodiment is higher than that of the other rubber of the tyre bead 2. The hardness is larger than 65 degrees JIS A hardness.

When assembling the pneumatic tyre 1 to the rim 10, the bead bottom surface 2a is seated on the rim seat 12 of the normal rim 10, and the bead outer surface 4 abuts against the rim flange 11.

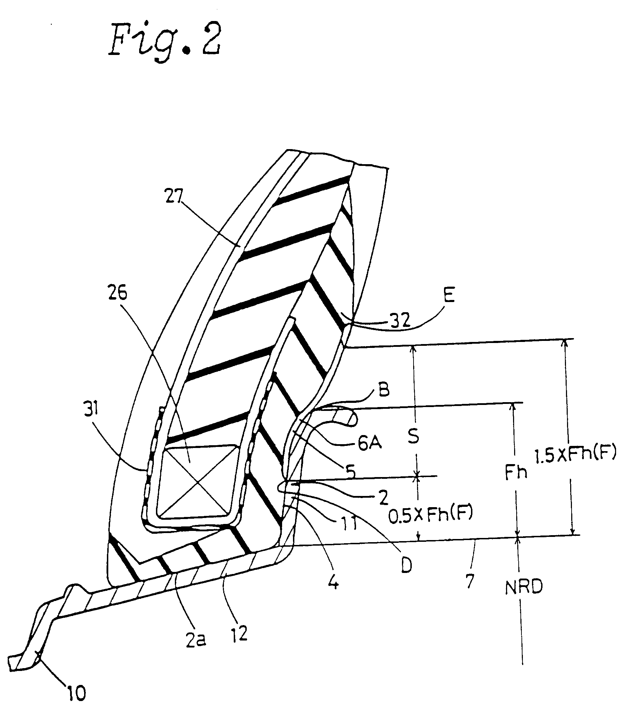

The rim flange 11, as shown in Fig. 2, has an upper end portion which is curved outside in the axial direction so as to go apart gradually from the bead outer surface 4. A separating point height Fh, defined as the distance in the tyre radial direction from the bead base line 7 to the separating point B at which the bead outer surface 4 separates from the rim flange 11 when the tyre 1 is correctly mounted on the normal rim 10.

On the bead outer surface 4, as mentioned above, there are grooves 6A. Each of the grooves 6A extends outwardly in the radial direction from an inner end D positioned within a region S. The region S is defined as a region remote from the bead base line 7 by a distance F of 0.5 to 1.5 times the separating point height Fh. That is, the height of the inner end D from the bead base line 7 in the radial direction is set to be in a range from 0.5 to 1.5 times the separating point height Fh.

On the bead outer surface 4, at least two grooves 6A, or preferably at least eight circumferentially spaced grooves 6A are provided. The width WA of the grooves 6A in the tyre circumferential direction is set at 0.3 to 5.0 mm, or more preferably in the range of 0.5 to 1.0 mm. The depth HA of the grooves 6A in the axial direction is set at 0.5 to 2.0 mm, or more preferably in the range of 0.7 to 1.0 mm.

The action of forcing out the air from the gap (g) between the bead part 2 and rim flange 11 formed by the grooves 6A will now be explained. Depending on the range of location of the region S of the inner end D of the grooves 6A, the action differs slightly, and individual cases are explained below.

(1) When the inner end D of the grooves 6A shown in Fig. 5 is remote from the bead base line 7 by a distance F1 of 0.5 to 0.8 times the separating point height Fh, and the outer end E is located near to the separating point B:

This is the case where the rigidity of the bead 2 is high, and the bead part 2 is inclined moderately as shown in Fig. 6, the bead outside surface 4 is assembled to the rim 10 in a position nearly parallel to the rim flange 11. The air in the gap (g) is forced out through the grooves 6A even if the inclination of the bead part is moderate when the tyre is blown home onto the rim as shown in Fig. 6, because the outer end E of the groove 6A is located near the separating point D, and the grooves 6A function as the exhaust means 5 allowing air to escape from the gap.

(2) When the inner end D of the grooves 6A is remote from the bead base line 7 by a distance F2 of 0.8 times to 1.5 times the separating point height Fh as shown in Fig. 7, and the outer end E is positioned apart from the inner end D by 5 to 15 mm in the radial direction:

This is used when the bending rigidity of the bead 2 is low. Then the bead 2 is greatly inclined to the radial direction of the tyre as shown in Fig. 8 on assembly. The bead outer surface 4 is fitted onto the rim 10 at a large inclination to the rim flange 11. As the inner ends D of the grooves are higher than the separating point B, the air in the gap (g) is forced out through the grooves 6A as shown in Fig. 8. Thus the grooves 6A serve as the exhaust means 5 for air to escape from the gap (g).

As mentioned above, even though the position of the inner end D is set higher than 1.0 times the separating point height Fh, the inner end D of the groove 6A may be always positioned inwards in the radial direction by inserting the bead 2 into the normal rim 10 at a large inclination. As a result, the air passage allowing escape from the gap (g) is temporary formed at the time of tyre assembly. Then, upon completion of tyre to rim assembly, the grooves 6A are no longer positioned between the confronting surfaces of the bead outer surface 4 and the rim flange 11, and an assembly of high precision results.

If the groove width WA of the grooves 6A is less than 0.3 mm or the groove depth HA is less than 0.5 mm, the rubber of the bead 2 is compressively deformed by contact of the bead outer surface 4 and the rim flange 11 at the time of rim assembly, and the air passages may be closed. On the other hand, if the groove width WA is over 5.0 mm or the groove depth HA is over 2.0 mm, the strength of the bead 2 drops, and the air seal may be spoiled. If the groove depth HA is less than 1.0 mm, when assembled the air passage formed by the grooves 6A is closed by elastic deformation by the pressure of the bead 2. As the result, air leak from the tyre inner space is prevented, and air tightness is further enhanced.

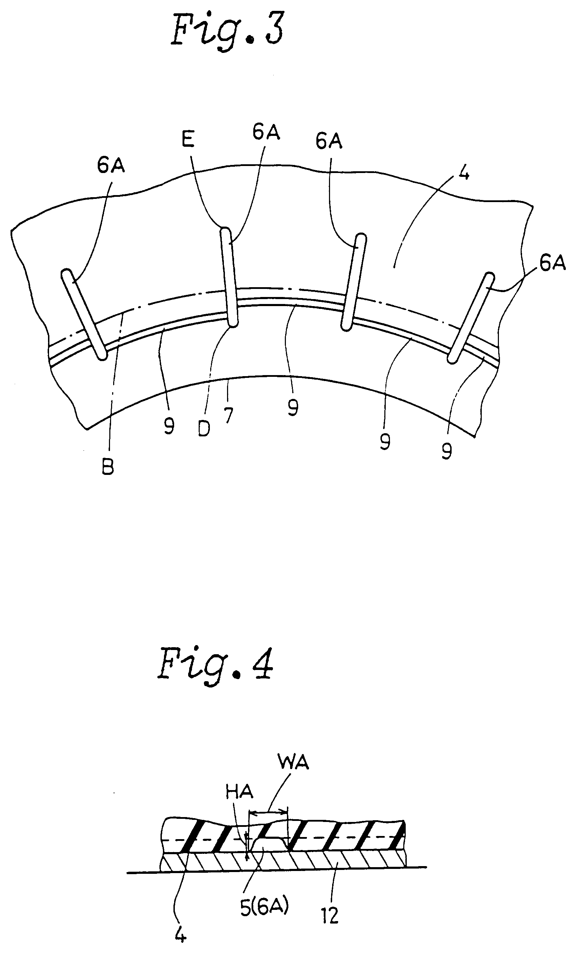

In the embodiment, furthermore, bypass grooves 9 each extending in the tyre circumferential direction radially inside the radius of the separating point B and interconnecting the adjacent grooves 6A are provided on the bead outer surface 4 as shown in Fig. 3. Thus air is uniformly forced out from the grooves 6A in the rim assembly, and the rim assembly precision is made uniform. In the embodiment, the bypass grooves 9 alternately change their radial distance from the bead babe line 7. The sectional shape of the grooves 6A may be of various profiles, including trapezoid, square, part circular etc.

To illustrate the invention tyres of size 205/65R15, were assembled onto a normal rim of 6.55JJ x 15, and inflated to an internal pressure of 2.0 kg/cm². The tyres were Embodiment 1 and then had the composition of Figure 1. The maximum size of the gap (g) on rim assembly was measured. A conventional tyre (Reference) without air vent grooves as shown in Fig. 10 was similarly assembled to a rim, and the gap (g) was measured. The gap size was measured by using a CT scanner Computer Topography Scanner). The measurement of the gap is expressed by the mean of measuring four points each on the front and rear side.

To measure the rim deviation, the test tyres were installed on a car, and travelling at a speed of 80 km/h, a brake test of 0.8 G measured by a gravitational accelerometer was repeated 20 times, the total of the rim deviation of tyre and rim was measured.

To analyse vibration, the test car was driven for 100 km, and the presence or absence of vibration was judged by the feeling of the driver.

The results of measurement are shown in Table 1.

As a result of the tests, as shown in Table 1, in the embodiments, as compared with the reference example, the gap

**Table 1**

| | Embodiment 1 | Reference |
|---|---|---|
| Composition of exhaust means | Grooves (Fig.1) | None |
| Height of inner end of exhaust means from bead base line (ratio to separating point height Fh) | 0.85Fh | - |
| Gap after rim assembly | 0.04mm | 1.2∼1.3mm |
| Rim deviation | 2.0mm | 30mm |
| Vibration | No abnormality after 100km travel | No abnormality after 100km travel |

in the rim assembly was slight, and the rim deviation was small, and formation of vibrations after use was suppressed.

## Claims

1. A pneumatic tyre for mounting on a normal rim (10), comprising a pair of beads (2) each having a bead bottom surface (2a) seating on a rim seat (12) of the normal rim and bead outer surface (4) connected to the bead bottom surface (2a) and arranged to abut a rim flange (11) of the normal rim, characterised in that the bead outer surface (4) has exhaust means (6) composed of a plurality of grooves (6A) formed in the bead outer surface (4) and extending outwards in the radial direction from an inner end (D) of the exhaust means (6) so as to form an air passage for escaping air from between the rim flange (11) and the bead outer surface (4) on assembly of the tyre to the rim, and wherein the inner end (D) of the exhaust means (6) is positioned within a region remote from a bead base line by a distance of at least 0.5 and not more than 1.5 times a separating point height Fh defined as the height in the radial direction from the bead base line to a separating point (B) at which the bead outer surface (4) separates from the rim flange (11) so that when the tyre is fitted to the rim (10) air trapped between the head outer surface (4) and the rim flange (11) is exhausted and the bead outer surface radially inward of the exhaust means (6) contacts the rim (10) to provide an air-tight seal.

2. A pneumatic tyre according to claim 1, characterised by a bypass groove (9) extending in the circumferential direction so as to communicate with the exhaust means (6).

3. A pneumatic tyre according to claim 1 or 2 , characterised in that the exhaust means (6) extends outwards in the radial direction from the inner end (D) remote from the bead base line by a distance of 0.5 to 0.8 times the separating point height Fh, and the outer end (E) is disposed near the separating point (B).

4. A pneumatic tyre according to claim 1 or 2, characterised in that the exhaust means (6) extends radially outwards from the inner end (D) remote from the bead base line by a distance of 0.8 to 1.5 times the separating point height Fh, and the outer end (E) is spaced from the inner end (D) by a distance of 5 to 15 mm in the radial direction.

5. A pneumatic tyre according to claim 1 or 2, characterised in that the exhaust means (6) extends radially outwards from the inner end (D) remote from the bead base line by a distance of 1.0 to 1.5 times the separating point height Fh, and the outer end (E) is spaced from the inner end by a distance of 5 to 15 mm in the radial direction.

6. A pneumatic tyre according to claim 1 or 2, characterised in that the exhaust means (6) is composed of at least two grooves (6A) disposed at intervals around the tyre circumferential direction.

7. A pneumatic tyre according to claim 1 or 2, characterised in that the exhaust means (6) is composed of at least eight grooves (6A) disposed at intervals around the tyre circumferential direction.

8. A pneumatic tyre according to claim 1 or 2, characterised in that exhaust means (6) is composed of grooves (6A) the width of which in the tyre circumferential direction is 0.3 to 5.0 mm.

9. A pneumatic tyre according to claim 1 or 2, characterised in that the exhaust means (6) is composed of grooves (6A) the width of which in the tyre circumferential direction is 0.5 to 1.0 mm.

10. A pneumatic tyre according to claim 1 or 2, characterised in that the exhaust means (6) is composed of grooves (6A) the depth or height of which in the tyre axial direction is 0.5 to 2.0 mm.

11. A pneumatic tyre according to claim 1 or 2, characterised in that the exhaust means (6) is composed of grooves (6A) the depth or height of which in the tyre axial direction is 0.7 to 1.0 mm.

## Patentansprüche

1. Luftreifen zur Montage auf einer normalen Felge (10), der einen Paar Wülste (2) umfaßt, die jeweils eine Wulstunterfläche (2a), die auf einem Felgensitz (12) der normalen Felge sitzt, und eine Wulstaußenfläche (4) aufweisen, die mit der Wulstunterfläche (2a) verbunden und so angeordnet ist, daß sie an einem Felgenflansch (11) der normalen Felge anschlägt, dadurch gekennzeichnet, daß die Wulstaußenfläche (4) ein Entlüftungsmittel (6) aufweist, das aus einer Vielzahl von Nuten (6A) zusammengesetzt ist, die in der Wulstaußenfläche (4) gebildet sind und sich in der Radialrichtung von einem inneren Ende (D) des Entlüftungsmittels (6) nach außen erstrecken, um eine Luftdurchgang zu bilden, damit Luft von zwischen dem Felgenflansch (11) und der Wulstaußenfläche (4) beim Aufziehen des Reifens auf die Felge entweicht, und wobei das innere Ende (D) des Entlüftungsmittels (6) in einem Bereich fern von einer Wulstbasislinie in einer Entfernung von mindestens dem 0,5 und nicht mehr als dem 1,5-fachen einer Trennpunkthöhe Fh positioniert ist, die als die Höhe in der Radialrichtung von der Wulstbasislinie zu einem Trennpunkt (B) definiert ist, bei dem sich die Wulstaußenfläche (4) von dem Felgenflansch (11) trennt, so daß, wenn der Reifen auf die Felge (10) gepaßt wird, Luft, die zwischen der Wulstaußenfläche (4) und dem Felgenflansch (11) gefangen ist, ausgelassen wird, und die Wulstaußenfläche radial innen von dem Entlüftungsmittel (6) die Felge (10) kontaktiert, um eine luftdichte Dichtung zu schaffen.

2. Luftreifen nach Anspruch 1, gekennzeichnet durch eine Bypass-Nut (9), die sich in der Umfangsrichtung erstreckt, so daß sie mit dem Entlüftungsmittel (6) in Verbindung steht.

3. Luftreifen nach Anspruch 1 oder 2, dadurch gekennzeichnet, daß sich das Entlüftungsmittel (6) in der Radialrichtung von dem inneren Ende (D), das fern von der Wulstbasislinie in einer Entfernung des 0,5 bis 0,8-fachen der Trennpunkthöhe Fh liegt, nach außen erstreckt, und daß das äußere Ende (E) nahe bei dem Trennpunkt (B) angeordnet ist.

4. Luftreifen nach Anspruch 1 oder 2, dadurch gekennzeichnet, daß sich das Entlüftungsmittel (6) in der Radialrichtung von dem inneren Ende (D), das fern von der Wulstbasislinie in einer Entfernung des 0,8 bis 1,5-fachen der Trennpunkthöhe Fh liegt, radial nach außen erstreckt, und daß das äußere Ende (E) von dem inneren Ende (D) in einer Entfernung von 5 bis 15 mm in der Radialrichtung beabstandet ist.

5. Luftreifen nach Anspruch 1 oder 2, dadurch gekennzeichnet, daß sich das Entlüftungsmittel (6) in der Radialrichtung von dem inneren Ende (D), das fern von der Wulstbasislinie in einer Entfernung des 1,0 bis 1,5-fachen der Trennpunkthöhe Fh liegt, radial nach außen erstreckt, und daß das äußere Ende (E) von dem inneren Ende in einer Entfernung von 5 bis 15 mm in der Radialrichtung beabstandet ist.

6. Luftreifen nach Anspruch 1 oder 2, dadurch gekennzeichnet, daß das Entlüftungsmittel (6) aus mindestens zwei Nuten (6A) zusammengesetzt ist, die in Intervallen um die Reifenumfangsrichtung herum angeordnet sind.

7. Luftreifen nach Anspruch 1 oder 2, dadurch gekennzeichnet, daß das Entlüftungsmittel (6) aus mindestens acht Nuten (6A) zusammengesetzt ist, die in Intervallen um die Reifenumfangsrichtung herum angeordnet sind.

8. Luftreifen nach Anspruch 1 oder 2, dadurch gekennzeichnet, daß das Entlüftungsmittel (6) aus Nuten (6A) zusammengesetzt ist, deren Breite in der Reifenumfangsrichtung 0,3 bis 5,0 mm beträgt.

9. Luftreifen nach Anspruch 1 oder 2, dadurch gekennzeichnet, daß das Entlüftungsmittel (6) aus Nuten (6A) zusammengesetzt ist, deren Breite in der Reifenumfangsrichtung 0,5 bis 1,0 mm beträgt.

10. Luftreifen nach Anspruch 1 oder 2, dadurch gekennzeichnet, daß das Entlüftungsmittel (6) aus Nuten (6A) zusammengesetzt ist, deren Tiefe oder Höhe in der Reifenaxialrichtung 0,5 bis 2,0 mm beträgt.

11. Luftreifen nach Anspruch 1 oder 2, dadurch gekennzeichnet, daß das Entlüftungsmittel (6) aus Nuten (6A) zusammengesetzt ist, deren Tiefe oder Höhe in der Reifenaxialrichtung 0,7 bis 1,0 mm beträgt.

## Revendications

1. Pneumatique destiné à être monté sur une jante normale (10), comprenant une paire de talons (2) ayant chacun une surface inférieure (2a) de talon en appui sur un siège (12) de la jante normale et une surface externe (4) de talon raccordée à la surface inférieure (2a) de talon et destinée à être en butée contre un flasque (11) de la jante normale, caractérisé en ce que la surface externe (4) de talon comporte un dispositif d'échappement (6) composé de plusieurs gorges (6A) formées à la surface externe (4) du talon et s'étendant vers l'extérieur dans la direction radiale depuis l'extrémité interne (D) du dispositif d'échappement (6) pour la formation d'un passage d'air permettant l'échappement de l'air entre le flasque (11) de la jante et la surface externe (4) du talon lors de l'assemblage du pneumatique sur la jante, et dans lequel l'extrémité interne (D) du dispositif d'échappement (6) est placée dans une région distante de la ligne de base de talon à une distance au moins égale à 0,5 fois et ne dépassant pas 1,5 fois la hauteur Fh du point de séparation définie comme étant la hauteur en direction radiale comprise entre la ligne de base de talon et un point de séparation (B) auquel la surface externe (4) de talon se sépare du flasque (11) de la jante si bien que, lorsque le pneumatique est monté sur la jante (10), l'air piégé entre la surface externe (4) de talon et le flasque (11) de la jante est évacué et la surface externe de talon, radialement vers l'intérieur du dispositif d'échappement (6), est au contact de la jante (10) pour former un joint hermétique.

2. Pneumatique selon la revendication 1, caractérisé par une gorge de dérivation (9) s'étendant dans la direction circonférentielle afin qu'elle communique avec le dispositif d'échappement (6).

3. Pneumatique selon la revendication 1 ou 2, caractérisé en ce que le dispositif d'échappement (6) s'étend vers l'extérieur dans la direction radiale depuis l'extrémité interne (D) qui est séparée de la ligne de base de talon par une distance comprise entre 0,5 et 0,8 fois la hauteur Fh du point de séparation, et l'extrémité externe (E) est placée à proximité du point de séparation (B).

4. Pneumatique selon la revendication 1 ou 2, caractérisé en ce que le dispositif d'échappement (6) s'étend radialement vers l'extérieur depuis l'extrémité interne (D) qui est séparée de la ligne de base de talon par une distance comprise entre 0,8 et 1,5 fois la hauteur Fh du point de séparation, et l'extrémité externe (E) est séparée de l'extrémité interne (D) par une distance comprise entre 5 et 15 mm dans la direction radiale.

5. Pneumatique selon la revendication 1 ou 2, caractérisé en ce que le dispositif d'échappement (6) s'étend radialement vers l'extérieur depuis l'extrémité interne (D) qui est séparée de la ligne de base de talon par une distance comprise entre 1,0 et 1,5 fois la hauteur Fh du point de séparation, et l'extrémité externe (E) est séparée de l'extrémité interne par une distance comprise entre 5 et 15 mm dans la direction radiale.

6. Pneumatique selon la revendication 1 ou 2, caractérisé en ce que le dispositif d'échappement (6) est composé d'au moins deux gorges (6A) disposées à certains intervalles autour de la direction circonférentielle du pneumatique.

7. Pneumatique selon la revendication 1 ou 2, caractérisé en ce que le dispositif d'échappement (6) est composé d'au moins huit gorges (6A) disposées à certains intervalles dans la direction circonférentielle du pneumatique.

8. Pneumatique selon la revendication 1 ou 2, caractérisé en ce que le dispositif d'échappement (6) est composé de gorges (6A) dont la largeur dans la direction circonférentielle du pneumatique est comprise entre 0,3 et 5,0 mm.

9. Pneumatique selon la revendication 1 ou 2, caractérisé en ce que le dispositif d'échappement (6) est composé de gorges (6A) dont la largeur dans la direction circonférentielle du pneumatique est comprise entre 0,5 et 1,0 mm.

10. Pneumatique selon la revendication 1 ou 2, caractérisé en ce que le dispositif d'échappement (6) est composé de gorges (6A) dont la profondeur ou la hauteur dans la direction axiale du pneumatique est comprise entre 0,5 et 2,0 mm.

11. Pneumatique selon la revendication 1 ou 2, caractérisé en ce que le dispositif d'échappement (6) est composé de gorges (6A) dont la profondeur ou la hauteur dans la direction axiale du pneumatique est comprise entre 0,7 et 1,0 mm.
